# EUROPÄISCHE PATENTANMELDUNG

(11) **EP 1 092 406 A2**
(43) Veröffentlichungstag der Anmeldung: **18.04.2001**
(21) Anmeldenummer: 00121678.7
(22) Anmeldetag: 04.10.2000
(51) Int. Cl.: A61G 5/04

(54) **Fahrzeug, insbesondere Rollstuhl**

(30) Priorität: 13.10.1999 DE 19949405; 18.08.2000 DE 10040521
(71) Anmelder: Ulrich Alber GmbH & Co. KG, 72458 Albstadt (DE)
(72) Erfinder: Birmanns, Thomas, 72336 Balingen (DE); Dörndorfer, Johannes, 73466 Lauchheim (DE)
(74) Vertreter: Staudt, Hans-Peter, Dipl.-Ing.

(57) **Zusammenfassung**

Ein Fahrzeug, insbesondere ein Krankenrollstuhl, weist ein Fahrzeuggestell, mindestens ein Antriebsrad, das über eine elektromotorische Antriebseinheit antreibbar ist, und eine Steuereinrichtung zur Steuerung der elektromotorischen Antriebseinheit auf, wobei das Antriebsrad eine Antriebsrad-Empfangseinrichtung zum berührungslosen Empfang von externen Signalen aufweist. Vorzugsweise ist an dem Fahrzeuggestell eine Fahrzeuggestell-Sendeeinrichtung zum berührungslosen Übertragen von Signalen zu der Antriebsrad-Empfangseinrichtung angeordnet und das Antriebsrad weist eine Antriebsrad-Sendeeinrichtung zum berührungslosen Übertragen von Signalen auf.

## Beschreibung

Die Erfindung betrifft ein Fahrzeug, insbesondere einen Rollstuhl, mit einem Fahrzeuggestell, mit mindestens einem Antriebsrad, das über eine elektromotorische Antriebseinheit antreibbar ist, und mit einer Steuereinrichtung zur Steuerung der elektromotorischen Antriebseinheit. Ein derartiges Fahrzeug ist beispielsweise aus der DE 198 57 786 A1 bekannt.

Die DE 198 57 786 A1 offenbart einen Rollstuhl, der zwei lösbar an dem Rollstuhlgestell befestigbare Antriebsräder aufweist. Jedes Antriebsrad verfügt über eine separate elektromotorische Antriebseinheit, welche jeweils einen Elektromotor, eine Akkumulatoranordnung und eine Steuereinrichtung aufweist. Die Antriebseinheiten der Antriebsräder sind völlig separat ausgelegt. Dies bedeutet, dass die Verbindung zu dem Rollstuhlgestell lediglich der mechanischen Befestigung der Antriebsräder dient, während eine Übertragung von Antriebsstrom oder Steuersignalen vom Rollstuhlgestell auf die Antriebsräder nicht vorgesehen ist. Dementsprechend muss die elektromotorische Antriebseinheit jedes Antriebsrades separat über einen entsprechenden Hauptschalter ein- oder ausgeschaltet werden.

Die Antriebsräder des aus der DE 198 57 786 A1 bekannten Rollstuhls sind als Unterstützungsantriebe ausgelegt, bei denen ein manuelles Drehen der Räder über entsprechende Greifringe durch die Elektromotoren verstärkt wird. Der Unterstützungsgrad dieser elektromotorischen Verstärkung ist einstellbar. Bei dem bekannten Rollstuhl muss aufgrund der separaten Auslegung der Antriebsräder somit für jedes Antriebsrad separat der Unterstützungsgrad eingestellt werden.

Der Erfindung liegt das technische Problem zugrunde, ein Fahrzeug, insbesondere einen Rollstuhl der gattungsgemäßen Art so auszuführen, dass die Bedienung für den Benutzer des Rollstuhls vereinfacht und die Bereitstellung von Komfort- und Sicherheitsmerkmalen ermöglicht wird.

Erfindungsgemäß wird dieses technische Problem dadurch gelöst, dass das Antriebsrad des gattungsgemäßen Fahrzeugs eine Antriebsrad-Empfangseinrichtung zum berührungslosen Empfang von externen Signalen aufweist.

Ein berührungsloser Empfang von Signalen im Sinne der Erfindung ist ein Empfang von Signalen, der ohne Kabelverbindung erfolgt. Die Signalübertragung kann beispielsweise optisch, kapazitiv, induktiv oder über Funk oder Ultraschall erfolgen.

In Bezug auf ein Antriebsrad sind externe Signale solche Signale, die von einer nicht in dieses Rad integrierten Sendeeinheit, beispielsweise von einer Sendeeinheit einer gegebenenfalls abnehmbaren Zentralsteuereinheit am Fahrgestell oder von einer Sendeeinheit an einem anderen Rad, zu diesem Rad übertragen werden. Der Begriff Signale im Sinne der Erfindung umfasst jeglichen Datenaustausch und insbesondere Steuersignale.

Bei einem Rollstuhl mit zwei Antriebsrädern mit jeweils separaten elektromotorischen Antriebseinheiten ermöglicht es die erfindungsgemäße Ausgestaltung der Antriebsräder mit jeweils einer Antriebsrad-Empfangseinrichtung zum berührungslosen Empfang von externen Signalen, von einer zentralen Sendeeinrichtung aus berührungslos Signale auf die Antriebsrad-Empfangseinrichtungen zu übertragen. Eine derartige zentrale Sendeeinrichtung ist vorzugsweise an dem Fahrzeuggestell angeordnet. Mittels einer derartigen Fahrzeuggestell-Sendeeinrichtung können zentral beide elektromotorischen Antriebseinheiten für die beiden Antriebsräder gleichzeitig ein- bzw. ausgeschaltet werden.

Die Fahrstufenauswahl, zum Beispiel der Grad der Unterstützung oder der Nachlauf, d.h. das Antriebsverhalten nach Beendigung der Einleitung einer manuellen Kraft, kann ebenfalls zentral gleichzeitig für beide elektromotorischen Antriebseinheiten getätigt werden.

In einer bevorzugten Ausführungsform ist die Fahrzeuggestell-Sendeeinrichtung in einem Bedienteil angeordnet, d.h. die Fahrzeuggestell-Sendeeinrichtung ist Bestandteil des Bedienteils und vorzugsweise in diesem integriert, oder die Fahrzeuggestell-Sendeeinrichtung ist als von dem Bedienteil separate Komponente ausgeführt, wobei zwischen dem Bedienteil und der Fahrzeuggestell-Sendeeinrichtung eine Signalübertragung möglich ist. Wenn das Bedienteil als von dem Fahrzeuggestell abnehmbares Bauteil ausgeführt ist, kann das Bedienteil eine Schlüsselfunktion übernehmen, so dass ein Einschalten der elektromotorischen Antriebseinheiten der Antriebsräder ohne das Bedienteil nicht möglich ist.

Bei entsprechender Ausführung des Bedienteils besteht zudem die Möglichkeit, das Fahrzeug mittels des Bedienteils ferngesteuert zu bedienen. Diese Funktion kann insbesondere bei Rollstühlen für gehbehinderte oder gehunfähige Personen sowie für Personen mit eingeschränkter Fähigkeit zur Steuerung des Fahrzeugs von erheblichem Nutzen sein. So kann beispielsweise eine gehbehinderte Person mit einer solchen Fernbedienung einen derartigen Rollstuhl von ihrem Bett aus von einer entfernten Stelle an das Bett heranfahren oder vom Fahrersitz eines Kraftfahrzeugs aus einen im hinteren Bereich des Kraftfahrzeugs mittels einer geeigneten Vorrichtung entladenen Rollstuhl per Fernbedienung so an die geöffnete Fahrertür des Kraftfahrzeugs heranfahren, dass ein Wechsel vom Fahrersitz in den Rollstuhl ohne fremde Hilfe möglich ist.

In einer vorteilhaften Ausführungsform der Erfindung weist jedes Antriebsrad neben einer Antriebsrad-Empfangseinrichtung zum berührungslosen Empfang von externen Signalen zudem eine Antriebsrad-Sendeeinrichtung zum berührungslosen Übertragen von Signalen auf. Hierdurch ergibt sich die Möglichkeit, dass bei zwei elektromotorisch angetriebenen Antriebsrädern eine Signalübertragung von Antriebsrad zu Antriebsrad stattfindet. Hierdurch besteht die Möglichkeit, ein Antriebsrad selbsttätig abzuschalten, wenn das andere Antriebsrad ausser Betrieb ist. Der Begriff "ausser Betrieb" umfasst hierbei einen ausgeschalteten Zustand, einen Defekt der elektromotorischen Antriebseinheit oder einen unzureichenden Ladezustand der Akkumulatoranordnung einer Antriebseinheit. Wenn aus einem derartigen Grund die elektromotorische Antriebseinheit eines Antriebsrades ausser Betrieb ist, werden von der Antriebsrad-Sendeeinrichtung dieses Antriebsrades entsprechende Signale ausgesandt oder der entsprechende Zustand wird durch Ausbleiben von Kontrollsignalen indiziert. Diese Signale können von einer zentralen Steuereinrichtung oder einer Steuereinrichtung des anderen Antriebsrades aufgenommen werden, wobei die jeweilige Steuereinrichtung daraufhin bewirkt, dass das andere Antriebsrad abgeschaltet wird.

Bei solchen Fahrzeugen, die eine separate Akkumulatoranordnung für jedes Antriebsrad aufweisen, besteht zudem die Möglichkeit, beide Antriebsräder gleichzeitig abzuschalten, wenn von der Antriebsrad-Sendeeinrichtung eines Rades ein Signal übertragen wird, welches die Information erhält, dass der Ladezustand der Akkumulatoranordnung für dieses Rad einen vorbestimmten unteren Grenzwert erreicht hat.

Wenn für jedes Antriebsrad eine separate Steuereinrichtung vorgesehen ist, können diese Steuereinrichtungen so ausgelegt sein, dass beide Antriebsräder mittels eines an einem Antriebsrad angeordneten Schalters gleichzeitig ein- und ausschaltbar sind. Bei dieser Ausführungsform bedarf es somit nicht notwendigerweise eines zentralen, beispielsweise am Fahrzeuggestell angeordneten Bedienteils, da ein entsprechender Signalaustausch lediglich zwischen den beiden Antriebsrädern direkt erfolgen kann.

Des weiteren besteht die Möglichkeit, Steuersignale zum Drehen und Bremsen eines Antriebsrades auf ein anderes Antriebsrad zu übertragen.

In einer weiteren vorteilhaften Ausführungsform der Erfindung ist an dem Fahrzeuggestell eine Fahrzeuggestell-Empfangseinrichtung zum berührungslosen Empfang von Signalen, insbesondere von einer Antriebsrad-Sendeeinrichtung vorgesehen. Dies ermöglicht nicht nur ein Feedback im Falle von Ansteuerungen verschiedenster Art mittels einer zentralen Steuereinrichtung, sondern darüber hinaus in Verbindung mit einer Anzeigevorrichtung die Anzeige von Betriebsparametern verschiedenster Art, beispielsweise der Betriebsbereitschaft des Fahrzeugs oder einzelner Komponenten hiervon, der Kapazität des Akkumulators oder der Akkumulatoren, einer eingelegten Fahrstufe, möglicher Störungen und Fehler sowie sonstiger Betriebsdaten, insbesondere hinsichtlich Zeit, Geschwindigkeit und Fahrtstrecke einschließlich eines Tageskilometerzählers. Es kann zudem die vom Fahrer des Rollstuhls aufgebracht Energie aufsummiert und angezeigt werden, was insbesondere aus therapeutischen Gründen sinnvoll sein kann. Die Anzeige kann hierbei mittels optischer Signale erfolgen, beispielsweise durch Leuchtdioden, Leuchtziffern, Flüssigkristallanzeigen oder analogen Anzeigeinstrumenten, mittels akustischer Signale, beispielsweise durch Piepser oder Warntöne, durch Vibrationen entsprechend ausgeführter Bauteile oder durch Erwärmung bestimmter Bauteile. Die Art der Anzeige hängt insbesondere von dem anzuzeigenden Parameter und dem Grad sowie der Art der Behinderung der Person ab, für die der Rollstuhl ausgelegt ist.

Die Erfindung wird im folgenden in Ausführungsbeispielen anhand der beigefügten Zeichnungen erläutert. Hierin zeigen:
Fig. 1 eine schematische Darstellung der funktionalen Zuordnung zweier Antriebsräder bei einer ersten Ausführungsform eines Rollstuhls,
Fig. 2 eine schematische Darstellung der funktionalen Zuordnung zweier Antriebsräder bei einer zweiten Ausführungsform eines Rollstuhls,
Fig. 3 eine schematische Darstellung der funktionalen Zuordnung zweier Antriebsräder bei einer dritten Ausführungsform eines Rollstuhls,
Fig. 4 eine schematische Darstellung der Hardware-Komponenten der Steuereinrichtung eines Antriebsrades,
Fig. 5 eine schematische Darstellung der funktionalen Zuordnung zweier Antriebsräder bei einer vierten Ausführungsform eines Rollstuhls,
Fig. 6 eine schematische Darstellung der funktionalen Zuordnung zweier Antriebsräder bei einer fünften Ausführungsform eines Rollstuhls,
Fig. 7 eine schematische Darstellung der funktionalen Zuordnung zweier Antriebsräder bei einer sechsten Ausführungsform eines Rollstuhls,
Fig. 8 ein Ablaufdiagramm zur Darstellung der Startroutine zwischen Master und Slaves,
Fig. 9 ein Ablaufdiagramm zur Darstellung der Kommunikation während des Betriebs des Rollstuhls und
Fig. 10 ein Ablaufdiagramm zur Darstellung der Kommunikation in der Lernphase zum Erkennen und Speichern der Netzteilnehmer.

Allen im folgenden näher erläuterten Ausführungsformen liegt ein Rollstuhl zugrunde, der zwei Antriebsräder aufweist. Jedes Antriebsrad verfügt über eine separate elektromotorische Antriebseinrichtung mit jeweils einem Elektromotor, einer Akkumulatoranordnung und einer Steuereinrichtung. Die Antriebsräder sind lösbar an einem Rollstuhlgestell befestigt. Die Befestigung erfolgt über eine Steckachse und eine Drehmomentstütze. Die beiden Antriebsräder verfügen jeweils über einen Greifring, über den die in dem Rollstuhl sitzende Person manuell ein Drehen der Antriebsräder bewirken kann. An den Greifringen sind Sensoren angeordnet, die die manuell eingeleitete Drehkraft messen und entsprechende Signale an die jeweilige Steuereinrichtung des Antriebsrades übertragen. In Abhängigkeit von einer vorgewählten Fahrstufe steuert die Steuereinrichtung den Elektromotor zur Unterstützung der manuell eingeleiteten Drehkraft an. Wenn während der Fahrt des Rollstuhls über den Greifring manuell eine Bremskraft eingeleitet wird, wird dieser Bremsvorgang in analoger Weise durch den Elektromotor unterstützt.

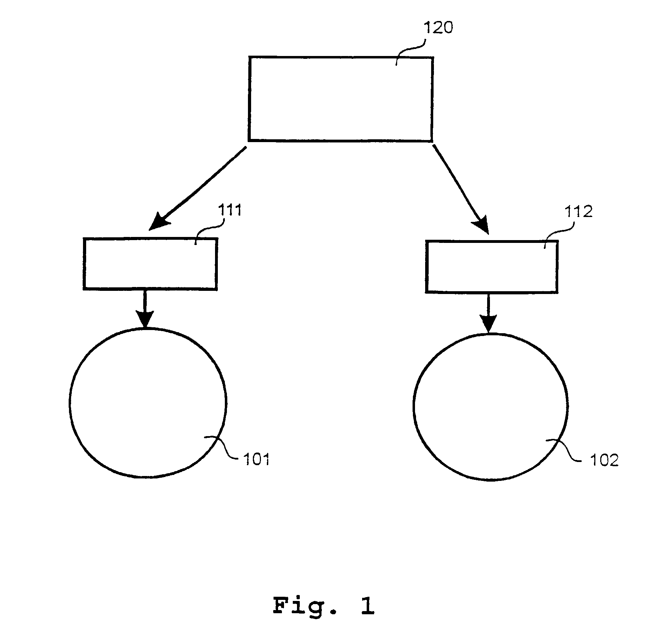

Im folgenden wird der prinzipielle Aufbau der ersten Ausführungsform gemäß Fig. 1 erläutert. In dieser Ausführungsform weist jedes Antriebsrad 101, 102 eine Antriebsrad-Empfangseinrichtung 111, 112 zum berührungslosen Empfang von externen Signalen auf. Eine an dem Fahrzeuggestell angeordnete Fahrzeuggestell-Sendeeinrichtung dient der berührungslosen Übertragung von Signalen zu den Antriebsrad-Empfangseinrichtungen 111, 112.

Mittels der Fahrzeuggestell-Sendeeinrichtung 120 kann ein gleichzeitiges Einschalten und Ausschalten der jeweiligen elektromotorischen Antriebseinheiten der Antriebsräder 101 und 102 sowie eine gleichzeitige Fahrstufenauswahl bewirkt werden.

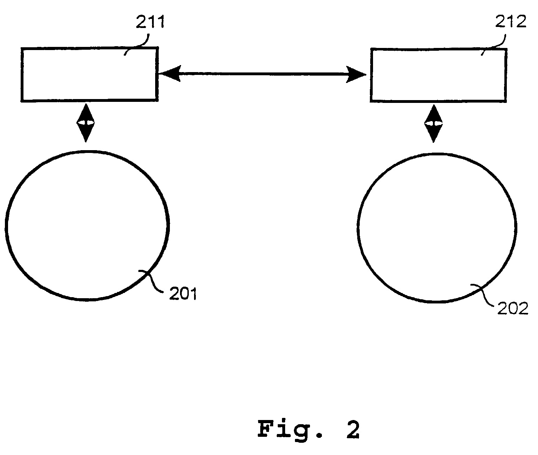

Fig. 2 zeigt den prinzipiellen Aufbau einer zweiten Ausführungsform. Bei dieser Ausführungsform sind an jedem Antriebsrad 201, 202 Datenübertragungseinrichtungen 211, 212 vorgesehen, die jeweils sowohl eine Antriebsrad-Empfangseinrichtung zum berührungslosen Empfang von externen Signalen als auch eine Antriebsrad-Sendeeinrichtung zum berührungslosen Übertragen von Signalen aufweisen.

Der Aufbau dieser zweiten Ausführungsform ermöglicht eine direkte Kommunikation zwischen den beiden Antriebsrädern 201, 202 untereinander. Hierdurch wird eine Sicherheitsabschaltung bei Ausfall eines Rades, eine Abschaltung beider Räder dann, wenn die Akkumulatoranordnung eines Rades einen unzureichenden Ladezustand aufweist, ein gemeinsames Ein- und Ausschalten beider Räder durch Betätigung lediglich eines Hauptschalters an einem Rad, ein gemeinsames Wechseln der Fahrstufen für beide Räder durch Betätigen lediglich eines Fahrstufenwechselschalters an einem Rad und eine Bedienung beider Räder gleichzeitig durch Handhabung lediglich eines Rades ermöglicht, was allgemein den Bedienungskomfort steigert und insbesondere bei einseitig behinderten oder gelähmten Personen, sogenannten Hemiplegikern, von Bedeutung ist.

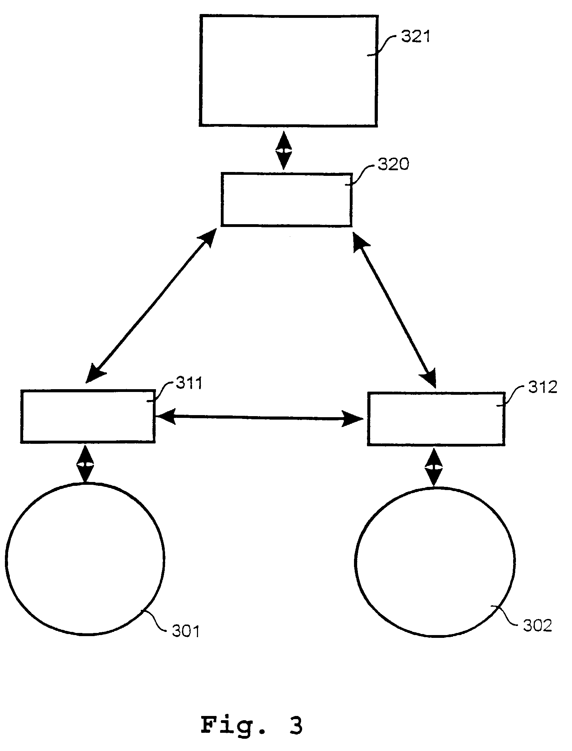

Bei der dritten Ausführung gemäß Fig. 3 weist jedes Antriebsrad 301, 302 ebenfalls jeweils eine Datenübertragungseinrichtung 311 bzw. 312 mit jeweils einer Antriebsrad-Empfangseinrichtung und einer Antriebsrad-Sendeeinrichtung auf. Zusätzlich ist bei dieser dritten Ausführungsform eine zentrale Datenübertragungseinrichtung 320 vorgesehen, welche eine Fahrzeuggestell-Sendeeinrichtung zum berührungslosen Übertragen von Signalen zu den Antriebsrad-Empfangseinrichtungen und eine Fahrzeuggestell-Empfangseinrichtung zum berührungslosen Empfang von Signalen von den Antriebsrad-Sendeeinrichtungen vorgesehen. Die zentrale Datenübertragungseinrichtung 320 ist mit einem Bedienteil 321 verbunden, welches von dem Fahrzeuggestell abnehmbar ist und einen Ein-/Ausschalter, einen Fahrstufenschalter und ein Display aufweist.

Bei dieser dritten Ausführungsform besteht die Möglichkeit, beide Antriebsräder 301, 302 gleichzeitig zentral vom Bedienteil 321 aus ein- und auszuschalten und zentral vom Bedienteil 321 aus eine Fahrstufenauswahl für beide Antriebsräder 301, 302 vorzunehmen. Zudem besteht die Möglichkeit, Betriebsparameter auf dem Display anzuzeigen, beispielsweise die Betriebsbereitschaft des Rollstuhls oder einzelner Komponenten hiervon, die Kapazität der Akkumulatoren, die eingelegte Fahrstufe, mögliche Störungen und Fehler sowie sonstige Betriebsdaten, insbesondere die Fahrtzeit, die Fahrtgeschwindigkeit, die zurückgelegte Strecke und gegebenenfalls Teilstrecken. Neben der optischen Anzeige besteht die Möglichkeit, der im Rollstuhl sitzenden Person mittels akustischer Signale, durch Vibrieren bestimmter Bauteile oder durch Erwärmen bestimmter Bauteile Informationen und Warnungen zukommen zu lassen.

Bei dieser dritten Ausführungsform können beide Antriebsräder 301 und 302 direkt untereinander und separat mit der zentralen Datenübertragungseinrichtung 320 kommunizieren. Die zentrale Datenübertragungseinrichtung 320 kann mit beiden Antriebsrädern 301, 302 gemeinsam oder separat kommunizieren. Es besteht zudem die Möglichkeit, sowohl durch den Benutzer des Rollstuhls als auch durch den Therapeuten bestimmte Betriebsparameter der elektromotorischen Antriebseinheiten einzustellen, beispielsweise den Unterstützungsgrad des Elektromotors, das Ansprechverhalten der Elektromotoren als Reaktion auf die manuelle Einleitung von Kräften oder einen rampenförmigen Abfall des elektromotorisch bereit gestellten Drehmoments nach Beendigung der manuellen Krafteinleitung und dergleichen.

Die Signal- bzw. Datenübertragung von Antriebsrad zu Antriebsrad bzw. zwischen Antriebsrad und Fahrgestell-Sende- bzw. Empfangseinrichtung kann auf verschiedene Art und Weise erfolgen. Wesentlich ist hierbei eine sichere Datenverbindung der unterschiedlichen Systeme im Sendebereich, d.h. eine eindeutige Zuordnung. Die Datenübertragung muss eine hohe Störfestigkeit aufweisen, auch wenn Funkkanäle durch andere Geräte dauerhaft belegt sind. Vorteilhaft sind mehrere selbstständig wechselnde Funkfrequenzen. Neben einer hohen Datensicherheit und guten Fehlerkorrektur sollte ein geringer Stromverbrauch im Standby-Modus verwirklicht werden. Die Datengeschwindigkeit sollte vorzugsweise mindestens 9.600 Baud betragen. Beim Aufwecken aus dem Standby-Modus und der anschließenden Synchronisation der einzelnen Komponenten sollte möglichst innerhalb von 2 Sekunden Betriebsbereitschaft erreicht werden. Die maximale Datenverzögerung sollte vorzugsweise nicht mehr als 40 ms betragen.

Bei einer optischen Übertragung der Daten bzw. Signale ist zu beachten, dass zwischen den einzelnen Komponenten Sichtkontakt gewährleistet sein muss. Hierzu können an den Rädern für die Kommunikation zwischen den Rädern beispielsweise 3 Sender und 3 Empfänger jeweils am Raddurchmesser angebracht sein.

Eine kapazitive Daten- bzw. Signalübertragung zwischen den Rädern kann dadurch verwirklicht werden, dass über den Rahmen des Fahrzeuggestells eine Trägerfrequenz übertragen wird.

Eine induktive Daten- bzw. Signalübertragung kann durch rotierende Spulen an den Rädern und feststehende Spulen am Fahrzeuggestell verwirklicht werden.

Bei einer Daten- bzw. Signalübertragung über Funk kommen insbesondere die bei im Handel üblichen Produkten verwendeten Frequenzbereiche 477 MHz und 868 MHz in Betracht. Auch der bei Funktelefonen genutzte Dect-Standard, bei dem auf 10 unterschiedlichen und ständig wechselnden Kanälen eine sichere Verbindung ermöglicht und Reichweiten von bis zu 300 m bei Datenübertragungsraten von 1,15 MB kein Problem sind, kann in Betracht gezogen werden. Ebenfalls in Betracht zu ziehen ist der Bluetooth-Standard mit einer Reichweite von zwischen 10 und 100 m, 64 kB Datenübertragung, 79 Kanälen, 2,4 GHz Frequenz und einer Leistungsaufnahme von 0,3 mA im Standby-Modus und maximal 30 mA bei Sendebetrieb.

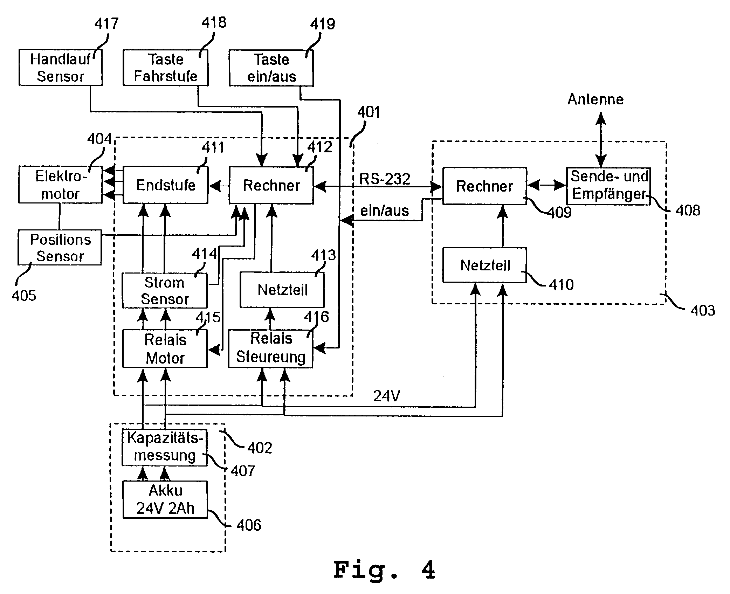

Im folgenden wird unter Bezug auf Fig. 4 eine Ausführungsform einer elektromotorischen Antriebseinheit eines Antriebsrades und deren Verknüpfung mit einer Antriebsrad-Empfangseinrichtung und Antriebsrad-Sendeeinrichtung erläutert. Das Blockschaubild gemäß Fig. 4 zeigt eine Steuereinrichtung 401, eine Akkumulatoranordnung 402, eine Sendeeinheit 403 und einen Elektromotor 404. Der Elektromotor 404 ist als Synchronmotor ausgeführt und weist einen Positionssensor 405 auf. Die Akkumulatoranordnung 402 weist einen Akkumulator 406 mit einer Ladekapazität von 2 Ah und einer Spannung von 24 V sowie eine Kapazitätsmesseinrichtung 407 auf. Die Sendeeinheit 403 beinhaltet als kombiniertes Bauteil eine Antriebsrad-Empfangseinrichtung und eine Antriebsrad-Sendeeinrichtung und weist eine Sende- und Empfangseinrichtung 408, einen Rechner 409 und ein Netzteil 410 auf. Die Steuereinrichtung 401 weist eine Endstufe 411, einen Rechner 412, ein Netzteil 413, einen Stromsensor 414, ein Motorrelais 415 und eine Relaissteuerung 416 auf. Der Rechner 412 der Steuereinheit 401 ist über eine RS-232-Schnittstelle mit dem Rechner 409 der Sendeeinheit 403 verbunden. Ein Handlaufsensor 417 ist dazu ausgelegt, eine manuell auf den Greifring des Antriebsrades aufgebrachte Kraft zu messen und entsprechende Signale zu dem Rechner 412 der Steuereinrichtung 401 zu übertragen. Die Auswahl der Fahrstufe erfolgt über einen Fahrstufentaster 418 und der Ein- und Ausschaltvorgang über eine Ein-/Ausschalttaste 419.

Der Akkumulator 406 ist ein NiCd-Akkumulator mit einer Kapazität von 1.900 mAh. Die Entladezeit im Standby-Modus beträgt etwa 30 Tage. Bei Verwendung eines NiMh-Akkumulators wird die Ladekapazität durch Selbstentladung des Akkumulators um ca. 1 bis 5 % pro Tag reduziert.

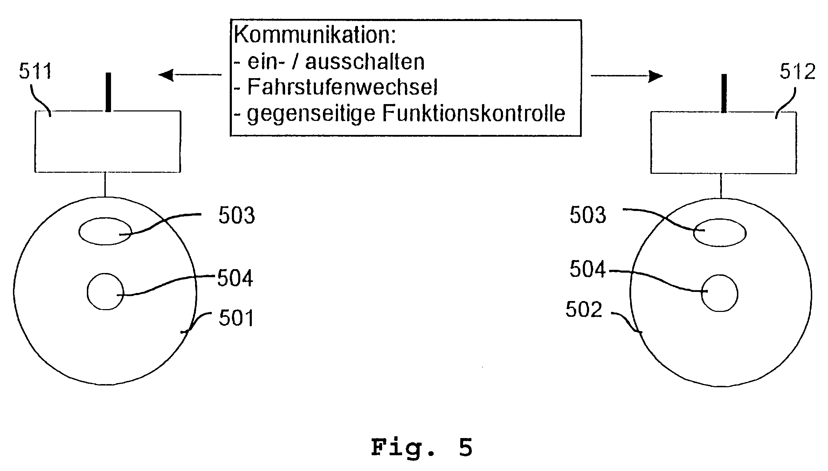

Im folgenden wird unter Bezug auf die Figuren 5 bis 7 anhand von weiteren Ausführungsformen der Erfindung der Netzaufbau erläutert. Jede Netzkomponente verfügt über eine eigene Nummer (Seriennummer). Zusätzlich enthält jede Netzkomponente Informationen darüber, welche weiteren Netzkomponenten im System vorhanden sind. Dieser Abgleich der Seriennummer kann bei der Herstellung im Werk oder gezielt durch einen Lernvorgang bei der Auslieferung des Fahrzeugs an den Kunden oder später erfolgen.

Master im Netz ist jeweils die Komponente, die das Einschalten vornimmt. Dies kann entweder eine Sendeeinheit eines Antriebsrads oder eine zentrale Datenübertragungseinrichtung am Fahrzeuggestell bzw. ein hiermit verbundenes oder in diese integriertes Bedienteil sein. Nach dem Einschalten des Masters versucht dieser, alle Slaves aufzuwecken. Es wird getestet, ob alle Netzkomponenten anwesend sind und sich aktivieren lassen. Erst nach erfolgreicher Aktivierung aller Netzkomponenten werden die Motoren gemeinsam frei gegeben. Der Master bestimmt das Timing, sendet in festen Zeitintervallen, beispielsweise alle 10 ms, seine Daten und empfängt im Gegenzug die Daten aller Slaves.

Fig. 5 zeigt eine 4. Ausführungsform. Bei dieser Ausführungsform sind an jedem Antriebsrad 501, 502 Datenübertragungseinrichtungen 511, 512 vorgesehen, die jeweils sowohl eine Antriebsrad-Empfangseinrichtung zum berührungslosen Empfangen von externen Signalen als auch eine Antriebsrad-Sendeeinrichtung zum berührungslosen Übertragen von Signalen aufweisen. Jedes Antriebsrad 501, 502 verfügt zudem über einen Fahrstufenschalter 503 und einen Ein-/Ausschalter 504.

Der Netzaufbau bei dieser 4. Ausführungsform ist so ausgeführt, dass sowohl die Datenübertragungseinrichtung 511 des linken Rades 501 als auch die Datenübertragungseinrichtung 512 des rechten Rades 502 als Master fungieren kann, wobei jeweils das andere Rad Slave ist. Es kann somit von jedem der beiden Antriebsräder 501, 502 aus ein Ein- und Ausschaltvorgang vorgenommen und ein Fahrstufenwechsel bewirkt werden. Master ist jeweils die Datenübertragungseinrichtung desjenigen Rades, an dem der Einschaltvorgang vorgenommen wird. Zudem findet eine gegenseitige Funktionskontrolle statt. Sobald bei einem der Antriebsräder ein Fehler auftritt, werden die Antriebseinheiten beider Antriebsräder gleichzeitig und gemeinsam abgeschaltet.

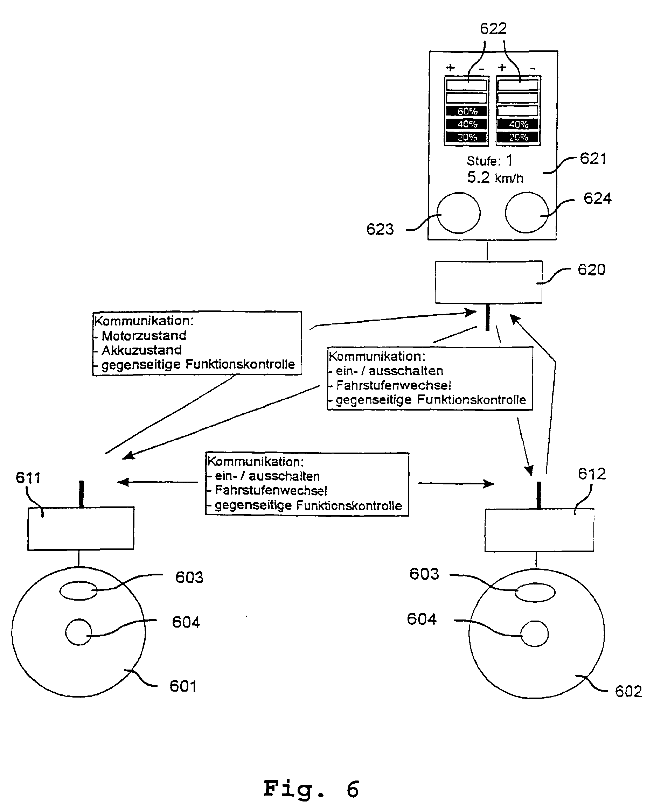

Fig. 6 zeigt in einer schematischen Darstellung eine 5. Ausführungsform.

Bei dieser Ausführungsform sind an jedem Antriebsrad 601, 602 Datenübertragungseinrichtungen 611, 612 vorgesehen, die jeweils sowohl eine Antriebsrad-Empfangseinrichtung zum berührungslosen Empfang von externen Signalen als auch eine Antriebsrad-Sendeeinrichtung zum berührungslosen Übertragen von Signalen aufweisen. Jedes Antriebsrad 601, 602 ist zudem mit einem Fahrstufenschalter 603 und einem Ein-/Ausschalter 604 versehen.

Im Vergleich zu der 4. Ausführungsform ist bei dieser 5. Ausführungsform zusätzlich eine zentrale Datenübertragungseinrichtung 620 vorgesehen, die mit einem Bedienteil 621 verbunden ist. Die zentrale Datenübertragungseinrichtung 620 weist eine Fahrzeuggestell-Sendeeinrichtung und eine Fahrzeuggestell-Empfangseinrichtung auf. Das Bedienteil 621 weist eine Anzeige 622 für den Ladezustand der Akkumulatoranordnungen jedes Antriebsrads 601, 602, der eingelegten Fahrstufe und der aktuellen Geschwindigkeit auf. Zudem sind an dem Bedienteil 621 ein Ein-/Ausschaltschalter 623 und ein Fahrstufenschalter 624 vorgesehen. In dem Netzwerk gemäß dieser 5. Ausführungsform kann sowohl das Bedienteil 621 mit der zentralen Datenübertragungseinrichtung 620 als auch jedes der Räder 601, 602 Master sein, abhängig davon, über welche dieser drei Netzwerkkomponenten das Einschalten erfolgt. Auch das Wechseln der Fahrstufe kann von allen drei Netzwerkkomponenten aus erfolgen. Von den Antriebsrädern 601, 602 aus werden an die zentrale Datenübertragungseinrichtung 620 Informationen bezüglich verschiedener Betriebsparameter, insbesondere des Zustandes des Motors und der Akkumulatoranordnung, sowie zur Funktionskontrolle übermittelt. Zwischen den Datenübertragungseinrichtungen 611 und 612 der Antriebsräder 601 und 602 findet ebenfalls eine direkte Kommunikation statt, die insbesondere Signale bezüglich eines Ein-/Ausschaltvorgangs, eines Fahrstufenwechsels und eine gegenseitige Funktionskontrolle beinhalten. Diese Kommunikation kann gegebenenfalls unter Zwischenschaltung der zentralen Datenübertragungseinrichtung 620 erfolgen.

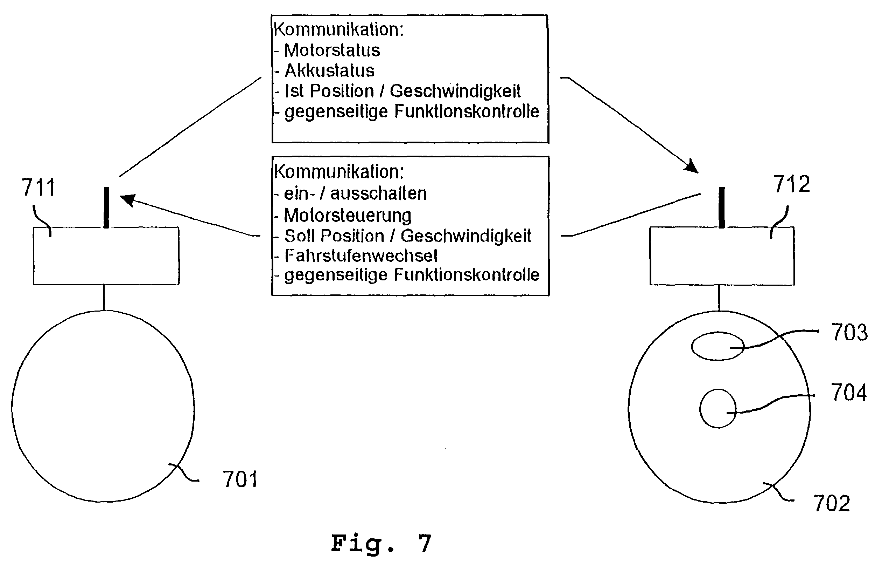

Unter Bezug auf Fig. 7 wird nachfolgend eine 6. Ausführungsform beschrieben. Diese 6. Ausführungsform ist auf die Bedürfnisse eines Hemiplegikers, d.h. einer Person, die einseitig gelähmt oder behindert ist, abgestellt. Diese 6. Ausführungsform weist ein passives Antriebsrad 701 und ein aktives Antriebsrad 702 auf. Beide Antriebsräder 701, 702 weisen jeweils eine Datenübertragungseinrichtung 711, 712 mit jeweils einer Antriebsrad-Empfangseinrichtung und einer Antriebsrad-Sendeeinrichtung auf. Ein Fahrstufenschalter 703 sowie ein Ein-/Ausschalter 704 sind lediglich an dem aktiven Rad 702 vorgesehen. Dieses aktive Rad 702, das in dem dargestellten Netzwerk den Master darstellt, befindet sich auf der gesunden Seite des Hemiplegikers. Die Kommunikation von der Datenübertragungseinrichtung 711 des passiven Rades 701 auf die Datenübertragungseinrichtung 712 des aktiven Rades 702 beinhaltet Informationen bezüglich verschiedener Betriebsparameter, insbesondere des Status des Elektromotors sowie der Akkumulatoranordnung und zusätzlich Informationen bezüglich der Ist-Position und Geschwindigkeit des Rades sowie eine gegenseitige Funktionskontrolle. Die Datenübertragung von der Datenübertragungseinrichtung 712 des aktiven Antriebsrades 702 auf die Datenübertragungseinrichtung 711 des passiven Antriebsrades 701 umfasst insbesondere Signale zum Ein- und Ausschalten, Steuersignale zur Antriebssteuerung des Elektromotors des passiven Antriebsrades 701, Informationen bezüglich Soliposition und Geschwindigkeit und Fahrstufenwechsel sowie eine gegenseitige Funktionskontrolle.

Bei dieser 6. Ausführungsform erfolgt das gemeinsame Ein- und Ausschalten sowie das gemeinsame Wechseln der Fahrstufe von der aktiven Seite des Benutzers aus. Zudem erfolgt eine gemeinsame Regelung beider Antriebsmotoren der Antriebsräder 701, 702 von der gesunden Seite aus. Diese 6. Ausführungsform kann zudem durch ein Bedienteil ergänzt werden, wie es beispielsweise zuvor in Verbindung mit der 5. Ausführungsform gemäß Fig. 6 erläutert wurde.

Zur Bereitstellung der erforderlichen Datensicherheit werden die Daten in fest definierten Paketgrößen mit eindeutiger und einmaliger Adressierung sowie Checksummen übermittelt. Alle Daten beziehen sich auf eine bestimmte Betriebszeit, beispielsweise auf eine Betriebszeit von 10 ms. Nach Ablauf dieser Zeit werden neue Daten übertragen. Ein eventueller Fehler kann somit in diesem Fall nur Auswirkungen auf eine Betriebszeit von 10 ms haben. Einstellungen am Motor werden in jedem Motor spannungsunabhängig zwischengespeichert.

Alle übertragenen Daten werden daraufhin überprüft, ob sie eine physikalisch sinnvolle Größe repräsentieren. Offensichtlich fehlerhafte Daten werden ignoriert. Werden bei einmaligen Übertragungen bzw. Befehlen, insbesondere beim Einschalten, offensichtlich unzulässige Daten übermittelt, wird eine Wiederholung der Übertragung veranlasst.

In bestimmten Intervallen, die beispielsweise 1/10 s oder 1/100 s betragen können, werden für jeden Antriebsmotor die folgenden Daten übermittelt:

Motornummer, Betriebszustand (bereit, aktiv, Stopp, Fehler), Betriebsspannung, Temperatur, Strom, Kapazität des Akkumulators, Geschwindigkeit, Position, Warnungen, Fehler, Sensorauslenkungen, Ein-/Ausschalterstellung (betätigt, nicht betätigt), Fahrstufenschalter (betätigt, nicht betätigt), Empfangsqualität.

Beim Einschaltvorgang werden von jedem Motor die folgenden Daten übermittelt:

Motornummer, Hardware-Version, Software-Version, Antriebsart, Antriebsregelung, Radgröße, Leistung (Fahrstufen 1 bis 3), Nachlauf, d.h. Antriebsverhalten nach Beendigung der Einleitung einer manuellen Kraft (1 bis 3), Selbstabschaltung, Töne, Betriebszeit, Einschaltzähler, Herstelldatum, letzte Änderung, Zustand des Akkumulators, Slave-Nummern.

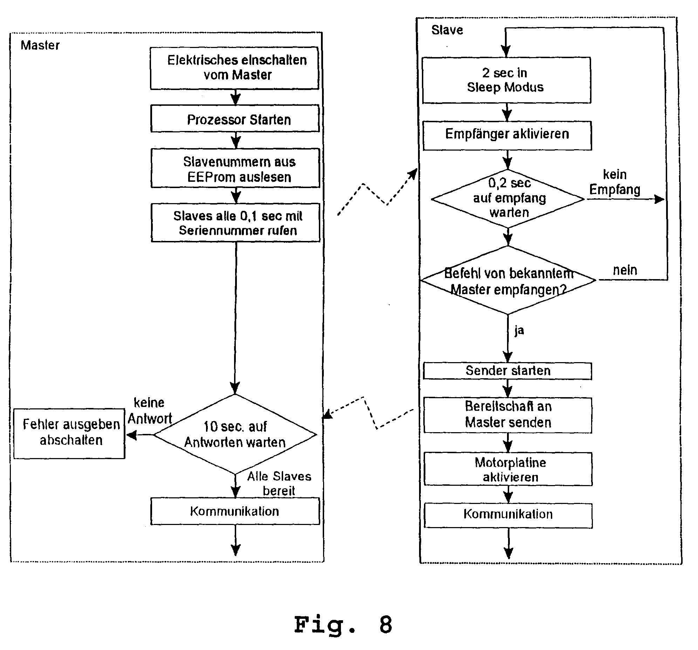

Der Kommunikationsablauf wird im folgenden anhand dreier spezieller Ablauffolgen in Verbindung mit den Figuren 8 bis 10 erläutert.

Fig. 8 zeigt in einem Blockschaubild die Startroutine zwischen dem Master und einem oder mehreren Slaves. Diese Startphase wird beim Einschaltvorgang durchlaufen und dient der Aktivierung und der Synchronisation der sich im Standby-Modus befindlichen "schlafenden" Slaves durch den Master. Wie bereits erläutert, ist der Master jeweils diejenige Netzkomponente, durch die der Einschaltvorgang bewirkt wird, d.h. diejenige Netzkomponente, deren Ein-/Ausschaltknopf zum Einschalten der Vorrichtung betätigt wird.

In der Startroutine werden durch den Master alle Slaves geweckt und eingeschaltet. Dabei wird die Anwesenheit aller Komponenten überprüft und anschließend die Datenkommunikation in synchronisierter Weise gestartet. Wird ein Fehler erkannt, erfolgt keine Aktivierung des gesamten Systems.

Wie Fig. 8 zu entnehmen ist, wird hierbei zunächst mit dem Einschaltvorgang der Prozessor des Masters gestartet und die Slave-Nummern werden aus einem EE-PROM ausgelesen. Anschließend werden die Slaves mit Seriennummern angerufen, wobei alle 0,1 s ein Anruf erfolgt. Die Slaves befinden sich jeweils 2 s in einem Sleep-Modus (Schlafmodus). Anschließend wird der Empfänger des Slaves aktiviert und wartet 0,2 s auf den Empfang eines Befehls. Wird kein Befehl empfangen oder lediglich ein Befehl empfangen, der nicht von einem bekannten Master kommt, kehrt der Slave für weitere 2 s in den Sleep-Modus zurück. Wird ein Befehl von einem bekannten Master empfangen, wird der Sender gestartet, ein Bereitschaftssignal an den Master gesendet, gegebenenfalls die Motorplatine aktiviert, sofern es sich bei dem Slave um die Datenübertragungseinrichtung eines Antriebsrades handelt, und die Kommunikation gestartet.

Wenn der Master nach Ablauf von 10 s kein Bereitschaftssignal aller Slaves empfängt, wird ein Fehler gemeldet und gegebenenfalls aktivierte Slaves werden abgeschaltet. Hat der Master vor dem Ablauf von 10 s von allen angerufenen Slaves Bereitschaftssignale erhalten, wird die Kommunikation aufgenommen.

Während des Betriebs werden die Slaves in einem festen zeitlichen Rhythmus durch den Master angesprochen. Die Zeitintervalle dieses Rhythmus können beispielsweise 10 ms oder 100 ms betragen.

Innerhalb des jeweiligen Zeitintervalls müssen die Slaves antworten. Beim Senden und Empfangen wird jedem Datenpaket die komplette Adresse einschließlich der Seriennummer zur Kontrolle beigefügt. Zudem wird nach jeder Datenübertragung auf eine neue Frequenz gewechselt. Master und Slave benutzen hierbei einen beim Starten vereinbarten Kanalwechselrhythmus, der abhängig von der Seriennummer ist.

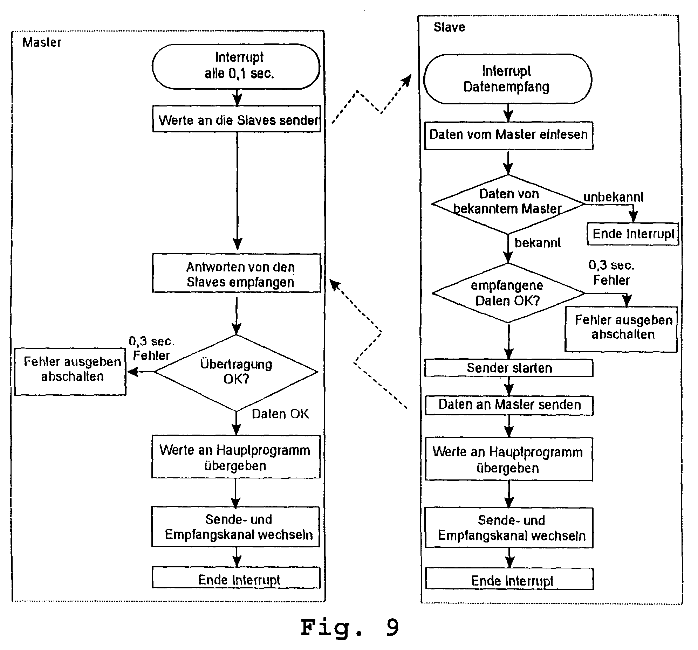

Wie aus Fig. 9 ersichtlich, sendet der Master alle 0,1 s einen Interrupt. In diesem zeitlichen Abstand werden alle Werte an die Slaves gesendet. Beim Datenempfang werden in den Slaves die Daten vom Master eingelesen und es findet eine Abfrage statt, ob der Master bekannt ist. Bei unbekanntem Master wird das Interrupt beendet. Bei bekanntem Master werden die empfangenen Daten überprüft. Wenn dreimal hintereinander fehlerhafte Daten festgestellt werden, erfolgt eine Fehlerausgabe und die Vorrichtung wird abgeschaltet.

Hiermit ist bei einem Interrupt von 0,1 s sicher gestellt, dass 0,3 s nach Auftreten eines Fehlers ein Abschalten erfolgt. Durch eine beispielweise um eine oder mehrere Zehnerpotenzen erhöhte Abfragefrequenz kann die Reaktionszeit entsprechend verkürzt werden.

Bei fehlerfreien Daten wird der Sender des Slaves gestartet, Daten der Slaves werden an den Master gesendet, entsprechende Werte werden an ein Hauptprogramm übergeben, der Sende- und Empfangskanal werden gewechselt und das Interrupt wird beendet.

Nach dem Empfang der Daten des Slaves durch den Master werden die übertragenen Daten überprüft. Bei dreimaligen fehlerhaften Daten wird die Vorrichtung ausgeschaltet und es erfolgt eine Fehlermeldung. Bei fehlerfreien Daten werden die Werte an das Hauptprogramm übergeben, der Sende- und Empfangskanal werden gewechselt und das Interrupt wird beendet.

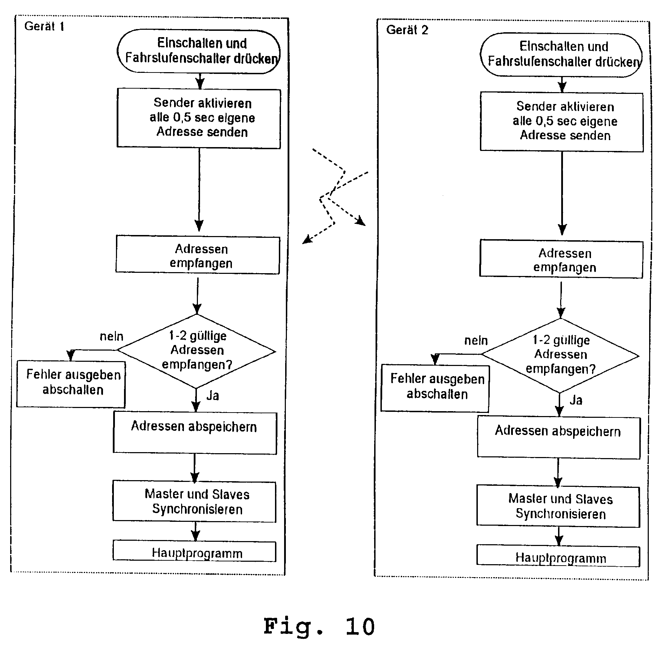

Im folgenden wird anhand von Fig. 10 der Kommunikationsablauf in der Lernphase anhand eines Systems erläutert, das aus einem Bedienteil mit einer zentralen Datenübertragungseinrichtung und zwei Antriebsmotoren besteht. Jede Komponente dieses Systems bzw. Netzwerks hat eine eigene eindeutige Kennnummer. Diese Kennnummer besteht aus der Herstellernummer, einer die Geräteart anzeigenden Nummer (Bedienteil oder Motor) und einer Seriennummer und ist weltweit für jedes Gerät einmalig. Zusätzlich zu der eigenen Kennnummer muss jede Komponente des Systems die Kennnummer der anderen Netzkomponenten kennen, damit diese angesprochen werden können. Diese Nummern können im Werk programmiert werden. Es besteht jedoch zudem die Möglichkeit, beim Austausch einzelner Komponenten eine Lernphase einzuleiten, damit eine neue Komponente in dem System erkannt und integriert werden kann.

Hierzu wird z. B. durch gleichzeitiges Drucken des Fahrstufenschalters und des Ein-/Ausschalters der Betriebszustand der Lernphase aktiviert, welcher dem Kennenlernen der einzelnen Komponenten dient. Durch entsprechende dauerhafte Pieptöne oder durch Hinweise auf einer Flüssigkristall(LCD)-Anzeige wird dem Benutzer signalisiert, dass die Lernphase aktiviert ist. Die Lernphase bleibt für maximal 30 s aktiv. Anschließend schalten sich die Komponenten wieder aus.

Während der Lernphase sendet jedes Gerät seine eigene Kennnummer aus und empfängt von den anderen Geräten die entsprechenden Kennnummern. Wenn jede Komponente lediglich zwei Kennnummern empfängt und sowohl die Herstellernummer als auch die die Geräteart anzeigende Nummer korrekt sind, werden diese Nummern in der entsprechenden Komponente gespeichert. Wenn während der Lernphase eines Systems im Funkbereich gleichzeitig die Lernphase eines weiteren Systems aktiv ist, erkennt jede Komponente mehr als zwei weitere Komponenten. Dies wird als Fehler erkannt. Die Lernphase wird daraufhin beendet und es erfolgt eine Fehlerausgabe. In solchen Fällen muss die Lernphase erneut aktiviert werden.

Zum erfolgreichen Abschluss einer Lernphase ist es somit erforderlich, dass nicht gleichzeitig im Funkbereich die Lernphase eines anderen entsprechenden Systems stattfindet. Dies stellt in der Praxis keinerlei Einschränkung dar. Während des normalen Betriebs, wie er zuvor erläutert wurde, stellt der gleichzeitige Betrieb eines entsprechenden weiteren Systems keinerlei Behinderung dar, da, wie bereits erläutert, jedes Datenpaket mit einer kompletten Adresse versehen ist, so dass lediglich diejenigen Daten von der Komponente eines Systems verwertet werden, die von Komponenten des gleichen Systems stammen. Ein gleichzeitiger Betrieb zweier oder mehrerer Rollstühle im Funkbereich ist somit problemlos möglich.

Ein erfolgreicher Abschluss der Lernphase kann durch Signaltöne oder eine entsprechende optische Anzeige signalisiert werden. Bei einer misslungenen Lernphase werden die bislang abgespeicherten Werte beibehalten. Dies stellt sicher, dass bei einer unbeabsichtigten Aktivierung der Lernphase für lediglich eine Komponente eines Systems ein Weiterbetrieb des gesamten Systems nach Beendigung der Lernphase möglich ist.

Zur Einleitung der Lernphase wird bei all denjenigen Komponenten, die in ein System integriert werden sollen, gleichzeitig der Ein-/Ausschaltknopf und der Fahrstufenschalter gedrückt. Hierdurch wird für die jeweilige Komponente die Lernphase aktiviert. Wenn, wie bei der beschriebenen Ausführungsform, die Lernphase für 30 s aktiv bleibt, bedeutet dies, dass innerhalb dieser 30 s die entsprechenden Geräte durch jeweiliges gleichzeitiges Drücken des Ein-/Ausschalters und Fahrstufenschalters aktiviert werden müssen. Durch diese Art der Aktivierung wird sicher gestellt, dass nur diejenigen Komponenten zum Ablauf der Lernphase aktiviert werden, die zu einem gemeinsamen System gehören. Insbesondere wird verhindert, dass im Funkbereich befindliche Komponenten anderer Systeme unbeabsichtigt zum Ablauf der Lernphase aktiviert werden. Dies könnte insbesondere bei einer Aktivierung der Lernphase in den Herstellungsräumen der Fall sein, in denen sich regelmäßig mehrere Komponenten befinden.

Nach Aktivierung der Lernphase wird bei jeder Komponente der Sender aktiviert und die eigene Adresse wird im Abstand von 0,5 s abgesandt. Wird bei einem System, das lediglich zwei Komponenten aufweist, d.h. einem Rollstuhl mit zwei Antriebsrädern und ohne Bedienteil, eine gültige Adresse erkannt oder bei einem System, das drei Komponenten aufweist, d.h. einem Rollstuhl mit zwei Antriebsrädern und einem zentralen Bedienteil, zwei gültige Adressen empfangen, werden die Adressen abgespeichert, Master und Slaves synchronisiert und das Hauptprogramm wird gestartet. Andernfalls erfolgt eine Fehlerausgabe und das System wird abgeschaltet.

Die zuvor beschriebenen Ausführungsformen weisen verschiedene Sicherheitseinrichtungen zum Schutz beim Auftreten von Fehlern auf. Sollte beispielsweise der Master oder einer der Slaves einen sicherheitskritischen Fehler erkennen, wird dieser von der betreffenden Systemkomponente an alle anderen Systemkomponenten bzw. Funkteilnehmer gesendet. Dies führt unverzüglich zum Abschalten aller Motoren. Der Master wiederholt die Fehlersendung danach im üblichen Übertragungsrhythmus für eine bestimmte Zeitdauer, beispielsweise 5 s, damit auch bei zeitweise gestörter Funkverbindung ein umgehendes Abschalten sicher gestellt wird. Entsprechend kann verfahren werden, wenn ein Kontrollsignal einer Systemkomponente einmal oder mehrfach oder über einen bestimmten Zeitraum ausbleibt.

Wie bereits erläutert, wird während der Kommunikation eine Fehlererkennung durchgeführt. Hierbei wird insbesondere die Größe des Datenpakets überwacht und eine Checksumme auf ihre Richtigkeit überprüft. Sollte innerhalb einer bestimmten Zeitspanne, beispielsweise innerhalb von 0,3 s, kein fehlerfreies Datenpaket übertragen werden, wird eine Störmeldung an alle Netzkomponenten gesendet und eine Abschaltung bewirkt.

Bei einer unterbrochenen Funkverbindung wird entsprechend verfahren. Sollte sich demnach einer der Slaves nach dreimaligem Anfordern von Daten nicht beim Master melden, wird eine Störmeldung an alle Komponenten gesendet und ein Abschalten eingeleitet. Sollte einer der Slaves innerhalb von 0,3 s keinen Befehl vom Master erhalten, wird ebenfalls eine Störmeldung ausgegeben und eine Abschaltung eingeleitet. Hierdurch wird sicher gestellt, dass bei fehlender Funkverbindung sowohl der Master als auch die Slaves deaktiviert werden. Die Deaktivierung sollte in jedem Fehlerfall möglichst zeitgleich und innerhalb einer kurzen Zeitspanne, vorzugsweise innerhalb von 0,1 s erfolgen.

## Patentansprüche

1. Fahrzeug, insbesondere Rollstuhl,
mit einem Fahrzeuggestell,
mit mindestens einem Antriebsrad, das über eine elektromotorische Antriebseinheit antreibbar ist, und
mit einer Steuereinrichtung zur Steuerung der elektromotorischen Antriebseinheit,
dadurch gekennzeichnet,
dass das Antriebsrad eine Antriebsrad-Empfangseinrichtung zum berührungslosen Empfang von externen Signalen aufweist.

2. Fahrzeug nach Anspruch 1, dadurch gekennzeichnet, dass an dem Fahrzeuggestell eine Fahrzeuggestell-Sendeeinrichtung zum berührungslosen Übertragen von Signalen zu der Antriebsrad-Empfangseinrichtung angeordnet ist.

3. Fahrzeug nach Anspruch 2, dadurch gekennzeichnet, dass die Fahrzeuggestell-Sendeeinrichtung zur Übertragung eines Ein-/Ausschaltsignals und/oder eines Fahrstufenauswahlsignals zu der Antriebsrad-Empfangseinrichtung ausgelegt ist.

4. Fahrzeug nach Anspruch 2 oder 3, dadurch gekennzeichnet, dass die Fahrzeuggestell-Sendeeinrichtung in einem Bedienteil angeordnet oder mit einem Bedienteil zwecks Signalaustausch verbunden ist.

5. Fahrzeug nach Anspruch 4, dadurch gekennzeichnet, dass das Bedienteil als abnehmbares Bauteil so ausgeführt ist, dass ein Betrieb des Fahrzeugs ohne Bedienteil nicht möglich ist.

6. Fahrzeug nach Anspruch 4 oder 5, dadurch gekennzeichnet, dass das Bedienteil als abnehmbares Bauteil so ausgeführt ist, dass ein ferngesteuerter Betrieb des Fahrzeugs mittels des Bedienteils möglich ist.

7. Fahrzeug nach einem der vorstehenden Ansprüche, dadurch gekennzeichnet, dass das Antriebsrad eine Antriebsrad-Sendeeinrichtung zum berührungslosen Übertragen von Signalen aufweist.

8. Fahrzeug nach Anspruch 7, wobei mindestens zwei Antriebsräder vorgesehen sind, dadurch gekennzeichnet, dass jedes Antriebsrad eine Antriebsrad-Sendeeinrichtung zum berührungslosen Übertragen von Signalen und eine Antriebsrad-Empfangseinrichtung zum berührungslosen Empfang von externen Signalen aufweist.

9. Fahrzeug nach Anspruch 8, wobei für jedes Antriebsrad eine separate elektromotorische Antriebseinheit vorgesehen ist, dadurch gekennzeichnet, dass die Steuereinrichtung dazu ausgelegt ist, ein zweites Antriebsrad abzuschalten, wenn von der Antriebsrad-Sendeeinrichtung ein Signal übertragen wird, welches die Information erhält, dass die elektromotorische Antriebseinheit für das erste Rad außer Betrieb ist.

10. Fahrzeug nach Anspruch 8 oder 9, wobei für jedes Antriebsrad eine separate Akkumulatoranordnung vorgesehen ist, dadurch gekennzeichnet, dass die Steuereinrichtung dazu ausgelegt ist, beide Antriebsräder abzuschalten, wenn von der Antriebsrad-Sendeeinrichtung eines Rades ein Signal übertragen wird, welches die Information erhält, dass der Ladezustand der Akkumulatoranordnung für dieses Rad einen vorbestimmten unteren Grenzwert erreicht hat.

11. Fahrzeug nach Anspruch 9 oder 10, wobei für jedes Antriebsrad eine separate Steuereinrichtung vorgesehen ist, dadurch gekennzeichnet, dass die Steuereinrichtungen so ausgelegt sind, dass beide Antriebsräder mittels eines an einem Antriebsrad angeordneten Schalters gleichzeitig ein- und auszuschaltbar sind.

12. Fahrzeug nach Anspruch 9, 10 oder 11, wobei für jedes Antriebsrad eine separate Steuereinrichtung vorgesehen ist, dadurch gekennzeichnet, dass die Steuereinrichtungen so ausgelegt sind, dass für beide Antriebsräder mittels eines an einem Antriebsrad angeordneten Schalters gleichzeitig ein Fahrstufenwechsel zu bewirken.

13. Fahrzeug nach Anspruch 8, 9, 10 oder 11, wobei für jedes Antriebsrad eine separate Steuereinrichtung vorgesehen ist, dadurch gekennzeichnet, dass die Steuereinrichtungen dazu ausgelegt sind, die elektromotorische Antriebseinheit ihres jeweiligen Antriebsrades auf der Basis von durch eine Antriebsrad-Sendeeinrichtung und eine Antriebsrad-Empfangseinrichtung übertragenen Steuersignalen zum Drehen und Bremsen eines anderen Antriebsrades anzusteuern.

14. Fahrzeug nach einem der vorstehenden Ansprüche, dadurch gekennzeichnet, dass an dem Fahrzeuggestell eine Fahrzeuggestell-Empfangseinrichtung zum berührungslosen Empfang von Signalen angeordnet ist.

15. Fahrzeug nach Anspruch 14, dadurch gekennzeichnet, dass die Fahrzeuggestell-Empfangseinrichtung mit einer Anzeigevorrichtung verbunden und die Anzeigevorrichtung so ausgelegt ist, dass eine Anzeige hinsichtlich der Betriebsbereitschaft des Fahrzeugs oder einzelner Komponenten hiervon, der Kapazität des Akkumulators oder der Akkumulatoren, einer eingelegten Fahrstufe, möglicher Störungen, Fehlern sowie sonstiger Betriebsdaten, insbesondere Zeit, Geschwindigkeit, Strecke und Tageskilometerzähler bereitgestellt wird.

16. Fahrzeug nach Anspruch 15, dadurch gekennzeichnet, dass die die Anzeigevorrichtung so ausgelegt ist, dass die Anzeige durch optische Signale und/oder akustische Signale und/oder durch Vibration übertragene Signale und/oder durch Erwärmung übertragene Signale bereitstellt.

17. Fahrzeug nach einem der vorstehenden Ansprüche, dadurch gekennzeichnet, dass jedes Antriebsrad mit einer separaten elektromotorischen Antriebseinheit versehen ist, wobei die Antriebseinheit einen Elektromotor, eine Akkumulatoranordnung und eine Steuereinrichtung aufweist.

18. Fahrzeug nach einem der vorstehenden Ansprüche, dadurch gekennzeichnet, dass für den berührungslosen Empfang von externen Signalen eine mehrzahl von unterschiedlichen Frequenzen vorgesehen ist, die einander in einer vorbestimmten Folge abwechseln.

19. Fahrzeug nach einem der vorstehenden Ansprüche, dadurch gekennzeichnet, dass zur Übertragung der externen Signale ein Datenpaket fest definierter Größe mit eindeutiger und einmaliger Adressierung vorgesehen ist, in dem die externen Signale enthalten sind.

20. Fahrzeug nach Anspruch 19, dadurch gekennzeichnet, dass jedem Datenpaket eine Checksumme zugeordnet ist.

21. Fahrzeug nach einem der vorstehenden Ansprüche, dadurch gekennzeichnet, dass die Steuereinrichtung dazu ausgelegt ist, ein externes Signal als fehlerhaftes Signal zu erkennen, wenn es eine nicht sinnvolle physikalische Größe repräsentiert.

22. Fahrzeug nach einem der vorstehenden Ansprüche, dadurch gekennzeichnet, dass Einstellungen der elektromotorischen Antriebseinheit spannungsunabhängig speicherbar sind.

23. Fahrzeug nach einem der vorstehenden Ansprüche, dadurch gekennzeichnet, dass jedes der Antriebsräder und/oder ein zentrales Bedienteil als Master-Netzwerkkomponente und die anderen Netzwerkkomponenten als Slaves dienen können, wobei diejenige Netzwerkkomponente Master ist, die als erste eingeschaltet wird.

24. Fahrzeug nach Anspruch 23, dadurch gekennzeichnet, dass bei jedem Einschaltvorgang eine Startroutine abläuft, mittels derer die Slaves durch den Master aus einem Sleep-Modus aktivierbar sind und eine Synchronisation der Netzwerkkomponenten durchführbar ist.

25. Fahrzeug nach Anspruch 23 oder 24, dadurch gekennzeichnet, dass eine Lernphase aktivierbar ist, die dem Kennenlernen der einzelnen Netzwerkkomponenten untereinander dient.
